# FASCICULE DE BREVET EUROPEEN

(11) **EP 2 285 682 B1**
(45) Date de publication et mention de la délivrance du brevet: **25.04.2012**
(21) Numéro de dépôt: 09772691.3
(22) Date de dépôt: 03.06.2009
(51) Int. Cl.: B64F 5/00, B64D 33/02

(54) **SUPPORT D'APPAREILS DE MESURE INTERCALE ENTRE UNE MOTORISATION ET UNE ENTREE D'AIR D'UNE NACELLE D'AERONEF**
ZWISCHEN EINER ANTRIEBSEINHEIT UND EINEM LUFTEINLASS EINER FLUGZEUGTRIEBWERKSGONDEL EINGESETZTER MESSGERÄTETRÄGER
MEASUREMENT INSTRUMENTS SUPPORT INTERPOSED BETWEEN AN ENGINE AND AN AIR INTAKE OF AN AIRCRAFT NACELLE

(30) Priorité: 06.06.2008 FR 0853759
(43) Date de publication de la demande: 23.02.2011
(73) Titulaire: Airbus Opérations SAS, 31060 Toulouse (FR)
(72) Inventeur: CHELIN, Frédéric, F-32430 Encausse (FR); LECONTE, Cédric, F-31000 Toulouse (FR); MONTETAGAUD, Fabienne, 31300 Toulouse (FR)
(74) Mandataire: Fantin, Laurent
(86) Numéro de dépôt international: PCT/FR2009/051049
(87) Numéro de publication internationale: WO 2010/001009

(56) Documents cités:
- FR-A- 2 898 870
- GB-A- 2 273 131
- US-A1- 2002 061 110

## Description

La présente invention se rapporte à un support d'appareils de mesure intercalé entre une motorisation et une entrée d'air d'une nacelle d'aéronef.

Un ensemble propulsif d'aéronef comprend une nacelle dans laquelle est disposée de manière sensiblement concentrique une motorisation reliée par l'intermédiaire d'un mât au reste de l'aéronef.

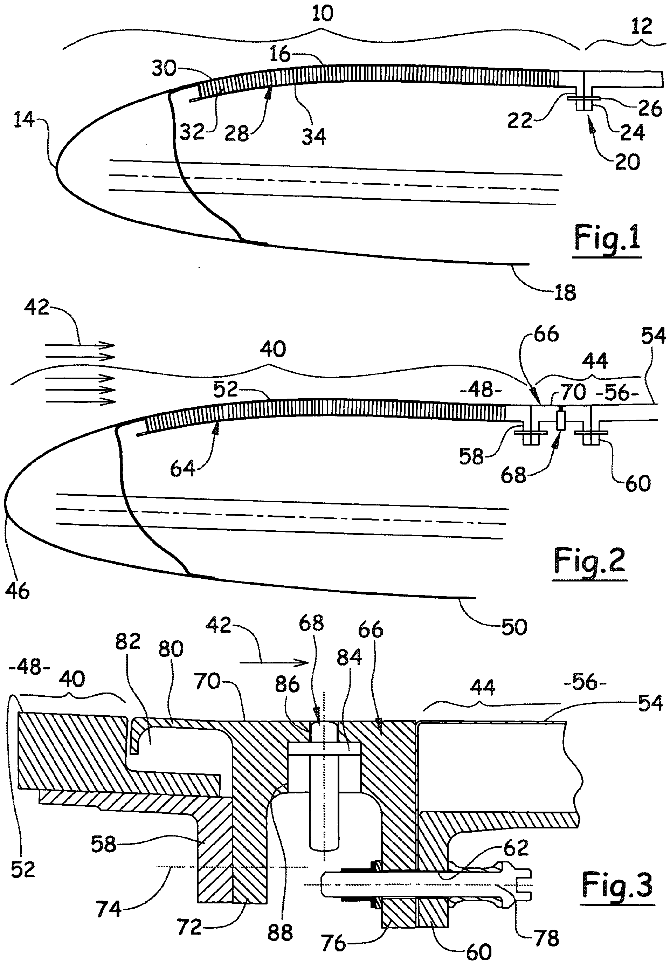

Comme illustré sur la figure 1, la nacelle comprend à l'avant une entrée d'air 10 permettant de canaliser un flux d'air dans une motorisation 12, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

L'entrée d'air 12 comprend une lèvre 14 dont la surface en contact avec les flux aérodynamiques est prolongée à l'intérieur de la nacelle par un conduit intérieur 16 de sections sensiblement circulaires et à l'extérieur de la nacelle par une paroi extérieure 18 de sections sensiblement circulaires.

L'entrée d'air 12 est reliée à la motorisation par des moyens de liaison 20 de type bride comprenant d'une part au niveau de l'extrémité du conduit intérieur 16 une collerette annulaire 22 offrant une première surface d'appui, et d'autre part, au niveau de la motorisation une collerette annulaire 24 offrant une seconde surface d'appui susceptible de prendre appui contre la première, des boulons 26, des rivets ou analogue étant répartis sur la circonférence des collerettes 22 et 24 pour les maintenir plaquées l'une contre l'autre et assurer ainsi la liaison entre l'entrée d'air et la motorisation.

Des techniques développées pour réduire le bruit émis par un aéronef, et notamment le bruit émis par les ensembles propulsifs, consiste à placer au niveau notamment de la paroi du conduit intérieur 16, un revêtement 28 visant à absorber une partie de l'énergie sonore, notamment en utilisant le principe des résonateurs d'Helmholtz. Afin d'optimiser le traitement acoustique, ce revêtement 28 doit s'étendre sur la surface la plus importante et s'étend généralement depuis la collerette 22 jusqu'à la lèvre 14.

De manière connue, un revêtement pour le traitement acoustique 28, également appelé panneau d'atténuation acoustique, comprend de l'extérieur vers l'intérieur une couche poreuse acoustiquement résistive 30, au moins une structure alvéolaire 32 et une couche réflectrice ou imperméable 34.

La couche acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

Afin d'améliorer les performances du traitement acoustique, il est nécessaire de déterminer avec le plus de précisons possible la signature acoustique de la motorisation. A cet effet, il est nécessaire de mettre des appareils de mesure tels que des microphones au plus proche des pales du moteur et en nombre déterminé en fonction des mesures souhaitées.

Pour obtenir une prise de mesure satisfaisante, il est préférable de placer les appareils de mesure de manière perpendiculaire à la surface en contact avec les flux d'air et de les maintenir parfaitement. De plus, ces appareils de mesure ne doivent pas perturber le flux entrant dans le moteur, sans quoi les bruits émis par ledit moteur seraient différents, et doivent donc être placés affleurant à la surface en contact avec les flux d'air.

Une nacelle avec un appareil de mesure est connue d e US 2002 /0061110, qui montre toutes les caractéristiques du préambule de la revendication 1.

Aussi, la présente invention vise à proposer un support d'au moins un appareil de mesure optimisant la prise de mesure.

A cet effet, l'invention a pour objet une nacelle d'aéronef comportant une entrée d'air permettant de canaliser un flux d'air en direction d'une motorisation, ladite entrée d'air comportant un conduit intérieur formant une surface aérodynamique en contact avec le flux d'air prolongée vers l'arrière par une surface aérodynamique d'un conduit de la motorisation, et comprenant un support d'au moins un appareil de mesure, ledit support, de forme annulaire, étant apte à être intercalé de façon amovible entre l'entrée d'air et la motorisation et comportant une surface dite aérodynamique susceptible d'assurer la continuité des surfaces aérodynamiques disposées en aval et en amont selon le sens d'écoulement du flux d'air.

D'autres caractéristiques et avantages ressortiront de la description qui va suivre de l'invention, description donnée à titre d'exemple uniquement, en regard des dessins annexés sur lesquels :
- la figure 1 est une coupe selon un plan radial d'une partie de l'avant d'une nacelle d'aéronef selon l'art antérieur,
- la figure 2 est une coupe selon un plan radial d'une partie de l'avant d'une nacelle d'aéronef selon l'invention,
- la figure 3 est une coupe selon un plan radial illustrant en détails un support d'au moins un appareil de mesure intercalé entre une entrée d'air et une motorisation d'une nacelle d'aéronef,
- la figure 4 est une vue en perspective d'une partie du support de la figure 3,
- la figure 5 est une vue en perspective du support de la figure 3, et
- la figure 6 est une vue en perspective illustrant en détails un support selon l'invention ainsi que ses moyens de liaison à l'entrée d'air et à la
motorisation, ledit support étant équipé d'appareils de mesure.

Sur la figure 2, on a représenté une partie de l'avant d'une nacelle d'un aéronef comprenant en 40 une entrée d'air permettant de canaliser un flux d'air 42 en direction d'une motorisation 44.

Pour la suite de la description, on entend par direction longitudinale, une direction parallèle à l'axe longitudinal de la motorisation.

L'entrée d'air 40 comprend une lèvre 46 dont la surface en contact avec le flux d'air 42 entrant est prolongée à l'intérieur de la nacelle par un conduit intérieur 48 de sections sensiblement circulaires et à l'extérieur de la nacelle par une paroi extérieure 50 de sections sensiblement circulaires.

Le conduit intérieur 48 comprend une surface aérodynamique 52 en contact avec le flux d'air 42 qui se prolonge vers l'arrière de la nacelle par une surface aérodynamique 54 d'un conduit 56 de la motorisation.

Le conduit intérieur 48 de l'entrée d'air comprend à l'arrière un chant en forme d'anneau en regard d'un chant en forme d'anneau du conduit 56 de la motorisation.

Selon un mode de réalisation illustré en détails sur la figure 3, le conduit intérieur 48 comprend une collerette annulaire 58 comportant une première surface d'appui formant le chant arrière dudit conduit intérieur 48. En vis-à-vis, le conduit 56 de la motorisation comprend une collerette annulaire 60 comportant une seconde surface d'appui formant le chant avant dudit conduit 56 sensiblement parallèle à la première surface d'appui.

Les collerettes 58 et 60 comprennent des orifices 62 susceptibles de permettre le passage de tiges, disposés en vis-à-vis, espacés et répartis sur la circonférence des collerettes.

Avantageusement, le conduit intérieur 48 comprend un revêtement pour le traitement acoustique 64, également appelé panneau d'atténuation acoustique, comportant de l'extérieur vers l'intérieur une couche poreuse acoustiquement résistive, au moins une structure alvéolaire et une couche réflectrice ou imperméable, la couche acoustiquement résistive formant la surface aérodynamique 52.

La motorisation, l'entrée d'air ainsi que le panneau d'atténuation acoustique ne sont pas plus détaillés car ils sont connus de l'homme du métier.

Selon l'invention, la nacelle comprend un support 66 d'au moins un appareil de mesure 68, indépendant de la motorisation et de l'entrée d'air.

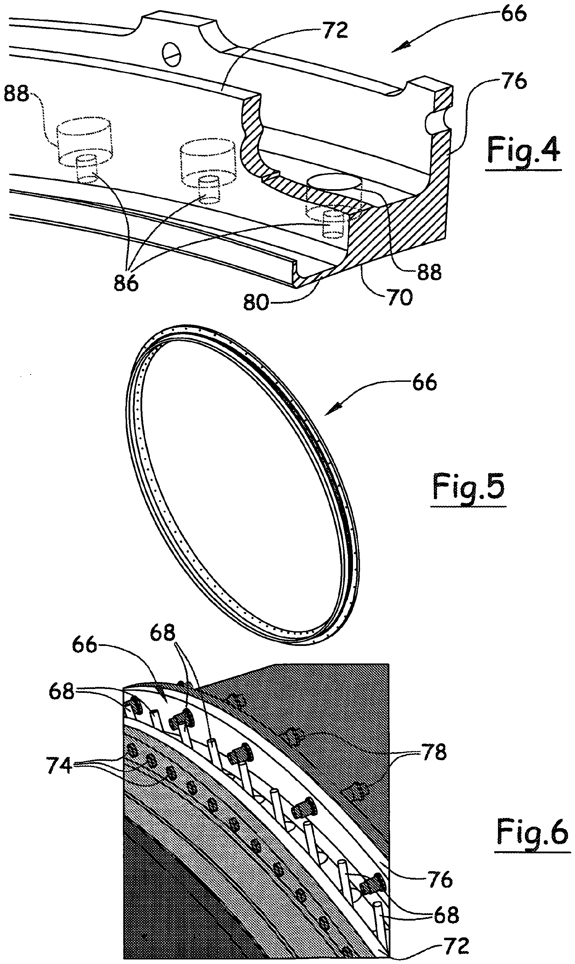

Ce support 66 de forme annulaire comme illustré sur la figure 5, comprend une surface 70 dite aérodynamique susceptible d'assurer la continuité des surfaces aérodynamiques 52 et 54 disposées en aval et en amont selon le sens d'écoulement du flux d'air 42. Ce support peut être réalisé en une ou plusieurs parties.

Cet agencement permet de limiter les effets du support sur le flux d'air 42.

En complément, le support 66 comprend des premiers moyens de liaison pour assurer la transmission des efforts entre l'entrée d'air 40 et ledit support 66 et des seconds moyens de liaison pour assurer la transmission des efforts entre la motorisation 44 et ledit support 66. De préférence, les moyens de liaison liant le support à l'entrée d'air et à la motorisation permettent de le rendre démontable. Pour assurer la transmission des efforts entre l'entrée d'air 40 et la motorisation 44, le support 66 a des formes adaptées.

Selon un mode de réalisation illustré sur les figures 2 à 4, le support 66 a une section sensiblement constante sur sa circonférence, en forme de U, la base du U formant la surface aérodynamique 70, les branches du U formant des surfaces d'appui en regard d'une part du chant arrière de l'entrée d'air et d'autre part du chant avant de la motorisation.

Selon un mode de réalisation illustré en détails sur la figure 6, l'une des branches du U du support 66 forme une collerette annulaire 72 comportant une surface d'appui susceptible d'être plaquée contre la surface d'appui de la collerette annulaire 58 du conduit intérieur 48. Les premiers moyens de liaison comprennent des boulons, des rivets 74 ou analogue, répartis sur la circonférence du support 66, pour maintenir les collerettes 58 et 72 plaquées l'une contre l'autre et assurer la transmission des efforts entre l'entrée d'air 40 et le support 66.

Selon un mode de réalisation illustré en détails sur la figure 6, l'autre branche du U du support 66 forme une collerette annulaire 76 comportant une surface d'appui susceptible d'être plaquée contre la surface d'appui de la collerette annulaire 60 du conduit 56 de la motorisation. Les seconds moyens de liaison comprennent des boulons, des rivets 78 ou analogue, répartis sur la circonférence du support 66, pour maintenir les collerettes 60 et 76 plaquées l'une contre l'autre et assurer la transmission des efforts entre la motorisation 44 et le support 66.

En fonction de la géométrie de l'entrée d'air ou de la motorisation, le support 66 peut comprendre au moins un prolongement 80 augmentant la superficie de la surface aérodynamique 70 de manière à recouvrir un éventuel décrochement 82 prévu au niveau du chant avant de la motorisation et/ou du chant arrière de l'entrée d'air, comme illustré sur la figure 3. Selon l'exemple illustré, le décrochement 82 sert au montage du support 66, notamment en logeant certains éléments de la liaison entre le chant arrière de l'entrée d'air et le support 66, le prolongement 82 recouvrant la fixation et l'isolant du flux aérodynamique afin de réduire les perturbations.

Selon un mode de réalisation, le support 66 est instrumenté d'appareils de mesure 68. Dans le cas présent, des microphones sont répartis sur toute la circonférence. Selon un mode de réalisation, un microphone a une forme cylindrique avec un épaulement 84.

Comme illustré sur les figures 4 et 6, la base du U du support 66 comprend, pour chaque microphone, un trou 86 traversant, débouchant au niveau de la surface aérodynamique 70. A l'opposé de la surface aérodynamique 70, le trou 86 comprend un lamage 88 dont le diamètre est adapté à celui de l'épaulement 84 du microphone à fixer. Selon cette configuration, chaque microphone est maintenu dans un trou 86 de manière à être sensiblement perpendiculaire à la surface aérodynamique 70, son extrémité étant sensiblement affleurante à ladite surface 70 de manière à ne pas interférer avec le flux d'air 42. Tout décalage vers l'intérieur ou vers l'extérieur de plus de 0,1 mm générerait des turbulences. Chaque microphone 68 est fixé dans le trou par tous moyens appropriés, par exemple par collage, par vissage ou autre.

Le support 66 ainsi instrumenté permet d'obtenir une prise de mesure optimale car les microphones 68 sont placés de manière perpendiculaire et à proximité de la surface en contact avec le flux d'air 42, ne perturbent pas le flux d'air et sont parfaitement maintenus. Enfin, le support 66 étant amovible, il peut être retiré de la nacelle après une campagne de mesure, l'entrée d'air étant alors solidarisée directement à la motorisation.

## Revendications

1. Nacelle d'aéronef comportant une entrée d'air (40) permettant de canaliser un flux d'air (42) en direction d'une motorisation (44), ladite entrée d'air (40) comportant un conduit intérieur (48) formant une surface aérodynamique (52) en contact avec le flux d'air (42) prolongée vers l'arrière par une surface aérodynamique (54) d'un conduit (56) de la motorisation, et comprenant un support (66) d'au moins un appareil de mesure (68), **caractérisée en ce que** ledit support (66), de forme annulaire, étant apte à être intercalé de façon amovible entre l'entrée d'air (40) et la motorisation (44) et comportant une surface (70) dite aérodynamique susceptible d'assurer la continuité des surfaces aérodynamiques (52, 54) disposées en aval et en amont selon le sens d'écoulement du flux d'air (42).

2. Nacelle d'aéronef selon la revendication 1, **caractérisée en ce que** le support (66) comprend des premiers moyens de liaison pour assurer la transmission des efforts entre l'entrée d'air (40) et ledit support (66) et des seconds moyens de liaison pour assurer la transmission des efforts entre la motorisation (44) et ledit support (66).

3. Nacelle d'aéronef selon la revendication 2, caractérisée en ce le support (66) a une section en forme de U, la base du U formant la surface aérodynamique (70), les branches du U formant des surfaces d'appui en regard d'une part du chant arrière de l'entrée d'air et d'autre par du chant avant de la motorisation.

4. Nacelle d'aéronef selon la revendication 3, **caractérisée en ce que** l'une des branches du U du support (66) forme une collerette annulaire (72) comportant une surface d'appui susceptible d'être plaquée contre la surface d'appui d'une collerette annulaire (58) du conduit intérieur (48), des moyens de liaison (74), répartis sur la circonférence du support (66), maintenant plaquées lesdites collerettes (58, 72) l'une contre l'autre et assurant la transmission des efforts entre l'entrée d'air (40) et le support (66).

5. Nacelle d'aéronef selon la revendication 3 ou 4, **caractérisée en ce que** l'une des branches du U du support (66) forme une collerette annulaire (76) comportant une surface d'appui susceptible d'être plaquée contre la surface d'appui d'une collerette annulaire (60) du conduit (56) de la motorisation, des moyens de liaison (78), répartis sur la circonférence du support (66), maintenant plaquées lesdites collerettes (60, 76) l'une contre l'autre et assurant la transmission des efforts entre la motorisation (44) et le support (66).

6. Nacelle d'aéronef selon l'une quelconque des revendications 3 à 5, **caractérisée en ce que** la base du U du support (66) comprend, pour chaque appareil de mesure, un trou (82) traversant, débouchant au niveau de la surface aérodynamique (70).

7. Nacelle d'aéronef selon la revendication 6, **caractérisée en ce que** chaque trou (82) comprend des moyens de liaison avec un appareil de mesure de manière à maintenir ledit appareil de manière sensiblement perpendiculaire à la surface aérodynamique (70), l'extrémité dudit appareil étant sensiblement affleurante à ladite surface 70 de manière à ne pas interférer avec le flux d'air (42).

## Claims

1. Aircraft nacelle that comprises an air intake (40) that makes it possible to channel a stream of air (42) in the direction of a power plant (44), whereby said air intake (40) comprises an inside pipe (48) that forms an aerodynamic surface (52) that is in contact with the stream of air (42) that is extended toward the rear by an aerodynamic surface (54) of a pipe (56) of the power plant, and comprising a support (66) of at least one measuring device (68), **characterized in that** said support (66) is annular and able to be inserted in a removable way between the air intake (40) and the power plant (44) and comprises a so-called aerodynamic surface (70) that can ensure the continuity of the aerodynamic surfaces (52, 54) that are placed downstream and upstream in the direction of flow of the stream of air (42).

2. Aircraft nacelle according to Claim 1, wherein the support (66) comprises first connecting means for ensuring the transmission of forces between the air intake (40) and said support (66), and second connecting means for ensuring the transmission of forces between the power plant (44) and said support (66).

3. Aircraft nacelle according to Claim 2, wherein the support (66) has a U-shaped cross-section, the base of the U forming the aerodynamic surface (70), the branches of the U forming the support surfaces opposite, on the one hand, the rear edge of the air intake, and, on the other hand, the front edge of the power plant.

4. Aircraft nacelle according to Claim 3, wherein one of the branches of the U of the support (66) forms an annular collar (72) that comprises a support surface that can be flattened against the support surface of an annular collar (58) of the inside pipe (48), whereby connecting means (74), distributed over the circumference of the support (66), keep said collars (58, 72) flattened one against the other, and ensure the transmission of forces between the air intake (40) and the support (66).

5. Aircraft nacelle according to Claim 3 or 4, wherein one of the branches of the U of the support (66) forms an annular collar (76) that comprises a support surface that can be flattened against the support surface of an annular collar (60) of the pipe (56) of the power plant, connecting means (78), distributed over the circumference of the support (66), keeping said collars (60, 76) flattened one against the other and ensuring the transmission of forces between the power plant (44) and the support (66).

6. Aircraft nacelle according to any of Claims 3 to 5, wherein the base of the U of the support (66) comprises, for each measuring device, a through hole (82) that empties out at the aerodynamic surface (70).

7. Aircraft nacelle according to Claim 6, wherein each hole (82) comprises connecting means with a measuring device in such a way as to keep said device in a manner that is essentially perpendicular to the aerodynamic surface (70), whereby the end of said device is essentially flush with said surface (70) so as not to interfere with the stream of air (42).

## Patentansprüche

1. Gondel eines Flugzeugs, umfassend einen Lufteinlass (40), der ermöglicht, einen Luftstrom (42) in Richtung einer Motorisierung (44) zu leiten, wobei der Lufteinlass (40) einen Innenkanal (48) umfasst, der eine mit dem Luftstrom (42) in Kontakt befindliche aerodynamische Fläche (52) ausbildet, die nach hinten durch eine aerodynamische Fläche (54) eines Kanals (56) der Motorisierung fortgesetzt ist, und umfassend einen Träger (66) für wenigstens ein Messgerät (68), **dadurch gekennzeichnet, dass** der Träger (66), der eine Ringform hat, geeignet ist, zwischen dem Lufteinlass (40) und der Motorisierung (44) lösbar eingesetzt zu werden, und eine sogenannte aerodynamische Fläche (70) aufweist, die geeignet ist, die Durchgängigkeit der aerodynamischen Flächen (52, 54), die in der Strömungsrichtung des Luftstroms (42) stromabwärts und stromaufwärts angeordnet sind, sicherzustellen.

2. Gondel eines Flugzeugs nach Anspruch 1, **dadurch gekennzeichnet, dass** der Träger (66) erste Verbindungsmittel umfasst, um die Übertragung der Kräfte zwischen dem Lufteinlass (40) und dem Träger (66) zu gewährleisten, sowie zweite Verbindungsmittel, um die Übertragung der Kräfte zwischen der Motorisierung (44) und dem Träger (66) zu gewährleisten.

3. Gondel eines Flugzeugs nach Anspruch 2, **dadurch gekennzeichnet, dass** der Träger (66) einen U-förmigen Querschnitt aufweist, wobei die Basis des U die aerodynamische Fläche (70) bildet, wobei die Schenkel des U Stützflächen bilden, einerseits gegenüber der hinteren Kante des Lufteinlasses und andererseits gegenüber der vorderen Kante der Motorisierung.

4. Gondel eines Flugzeugs nach Anspruch 3, **dadurch gekennzeichnet, dass** der eine der Schenkel des U des Trägers (66) einen ringförmigen Kragen (72) bildet, der eine Stützfläche aufweist, die geeignet ist, gegen die Stützfläche eines ringförmigen Kragens (58) des Innenkanals (48) gedrückt zu werden, wobei Verbindungsmittel (74), die über den Umfang des Trägers (66) verteilt sind, die Kragen (58, 72) gegeneinander gedrückt halten und die Übertragung der Kräfte zwischen dem Lufteinlass (40) und dem Träger (66) sicherstellen.

5. Gondel eines Flugzeugs nach Anspruch 3 oder 4, **dadurch gekennzeichnet, dass** der eine der Schenkel des U des Trägers (66) einen ringförmigen Kragen (76) bildet, der eine Stützfläche aufweist, die geeignet ist, gegen die Stützfläche eines ringförmigen Kragens (60) des Kanals (56) der Motorisierung gedrückt zu werden, wobei Verbindungsmittel (78), die über den Umfang des Trägers (66) verteilt sind, die Kragen (60, 76) gegeneinander gedrückt halten und die Übertragung der Kräfte zwischen der Motorisierung (44) und dem Träger (66) sicherstellen.

6. Gondel eines Flugzeugs nach einem der Ansprüche 3 bis 5, **dadurch gekennzeichnet, dass** die Basis des U des Trägers (66) für jedes Messgerät ein durchgehendes Loch (82) aufweist, das im Bereich der aerodynamischen Fläche (70) ausmündet.

7. Gondel eines Flugzeugs nach Anspruch 6, **dadurch gekennzeichnet, dass** jedes Loch (82) Mittel zum Verbinden mit einem Messgerät umfasst, derart, dass das Gerät im Wesentlichen senkrecht zu der aerodynamischen Fläche (70) gehalten wird, wobei das Ende des Gerätes an der Fläche (70) im Wesentlichen bündig abschließt, um den Luftstrom (42) nicht zu stören.
